# EUROPÄISCHE PATENTSCHRIFT

(11) **EP 2 290 258 B1**
(45) Veröffentlichungstag und Bekanntmachung des Hinweises auf die Patenterteilung: **22.01.2014**
(21) Anmeldenummer: 10014837.8
(22) Anmeldetag: 03.04.2009
(51) Int. Cl.: F16F 1/02, A47C 27/06, A47C 23/00

(54) **Federelement**
Spring element
Elément de ressort

(30) Priorität: 03.04.2008 DE 202008004616 U
(43) Veröffentlichungstag der Anmeldung: 02.03.2011
(62) Teilanmeldung aus: 09004972.7
(73) Patentinhaber: Diemer & Dr. Jaspert GbR, 85630 Grasbrunn (DE)
(72) Erfinder: Jaspert, Bodo F., 85630 Grasbrunn (DE); Diemer, Gregor, 85456 Wartenberg (DE)
(74) Vertreter: Manitz, Finsterwald & Partner GbR

(56) Entgegenhaltungen:
- EP-A2- 1 335 148
- WO-A1-01/81785
- WO-A1-2006/111685
- DE-U1-202007 000 158
- US-A1- 2007 262 634

## Beschreibung

Die vorliegende Erfindung betrifft ein Federelement als Kern einer Federkernmatratze oder als Stützelement einer Untermatratze zur Abstützung einer Obermatratze mit einer unteren Stützfläche, einer oberen Stützfläche und einem die untere Stützfläche mit der oberen Stützfläche verbindenden Federkörper, welcher mehrere Federarme aufweist, die von der unteren Stützfläche nach außen weg und anschließend wieder zurück nach innen geführt sind, insbesondere ohne sich in Federrichtung betrachtet zu überlappen, wobei jeder Federarm zwei nach radial innen zurückgeführte Abschnitte aufweist, die insbesondere beidseits des nach radial außen geführten Federarms angeordnet sind und wobei an die radial inneren Enden der beiden nach radial innen zurückgeführten Abschnitte jeweils ein weiterer nach radial außen geführter Abschnitt anschließt.

Die WO 2006/111685 A1 offenbart ein Federelement gemäß dem Oberbegriff des Anspruchs 1.

Der Erfindung liegt die Aufgabe zugrunde, ein derartiges Federelement weiterzubilden.

Diese Aufgabe wird dadurch gelöst, dass die weiteren nach radial außen geführten Abschnitte jeweils einen Teil einer Deckplatte bilden, die von den Deckplatten der übrigen Federarme getrennt ist, und dass die Deckplatten der Federarme zusammen die obere Stützfläche bilden.

Dadurch dass jeder Federarm zwei nach radial innen zurückgeführte Abschnitte aufweist, die insbesondere beidseits des nach radial außen geführten Federarms angeordnet sind, ergibt sich eine vorteilhafte symmetrische Anordnung, bei der sich die beiden nach radial innen zurückgeführten Abschnitte nicht auseinander bewegen. Bei Kompression wird ihnen nur der gemeinsame, nach außen gerichtete Arm verformt.

An die radial inneren Enden der beiden nach radial innen zurückgeführten Abschnitte schließt sich jeweils ein weiterer, nach radial außen geführter Abschnitt an. Diese weiteren nach radial außen geführten Abschnitte sind in Federrichtung betrachtet insbesondere beidseits der beiden nach radial innen zurückgeführten Abschnitte angeordnet und bevorzugt an ihrem radial außen liegenden Ende miteinander verbunden. Dadurch wird eine symmetrische und stabile Stützfläche gebildet.

Bei allen Ausgestaltungen der Erfindung verlaufen die Federarme bevorzugt ausgehend von der unteren Stützfläche strahlenförmig nach radial außen. Auch hier ergibt sich eine stabile symmetrische Anordnung mit guten Federeigenschaften.

Das Federelement besteht bevorzugt aus Kunststoff und ist insbesondere einstückig gefertigt. Um eine einfache Entformung des Federelements zu ermöglichen, ist dieses so ausgebildet, dass sich die Teile des Federelements in Federrichtung betrachtet nicht gegenseitig überdecken.

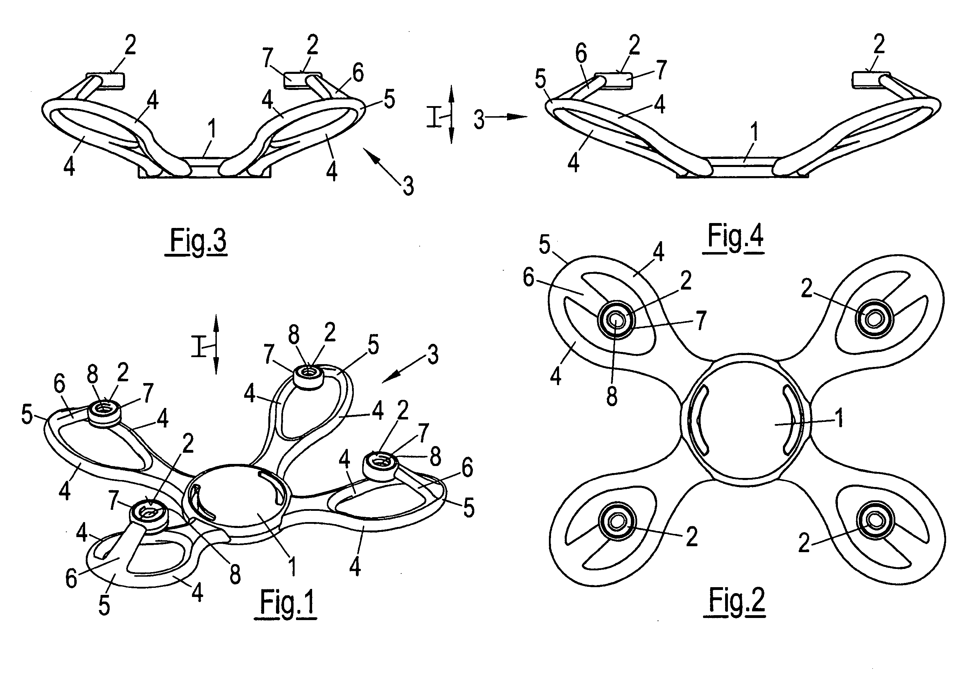

Ausführungsbeispiele der Erfindung sind in der Zeichnung dargestellt und werden nachfolgend beschrieben. Es zeigen, jeweils in schematischer Darstellung,
- Fig. 1: eine perspektivische Ansicht eines nicht erfindungsgemäßen Federelements,
- Fig. 2: eine Draufsicht auf die Oberseite des Federelements von Fig. 1,
- Fig. 3: eine Seitenansicht des Federelements von Fig. 1,
- Fig. 4: eine um 90° gedrehte Seitenansicht des Federelements von Fig. 1,
- Fig. 5: eine perspektivische Ansicht eines weiteren nicht erfindungsgemäßen Federelements,
- Fig. 6: eine Draufsicht auf die Oberseite des Federelements von Fig. 5,
- Fig. 7: eine Seitenansicht des Federelements von Fig. 5,
- Fig. 8: eine um 90° gedrehte Seitenansicht des Federelement von Fig. 5,
- Fig. 9: eine perspektivische Ansicht eines erfindungsgemäßen Federelements,
- Fig. 10: eine Draufsicht auf die Oberseite des Federelements von Fig. 9,
- Fig. 11: eine Seitenansicht des Federelements von Fig. 9, und
- Fig. 12: eine um 90° gedrehte Seitenansicht des Federelements von Fig. 9.
Das in den Fig. 1 bis 4 dargestellte Federelement umfasst eine untere Stützfläche 1, eine obere Stützfläche 2 und einen die untere Stützfläche 1 mit der oberen Stützfläche 2 verbindenden Federkörper 3. Der Federkörper 3 umfasst mehrere Federarme 4, die von der unteren Stützfläche 1 nach außen weg und anschließend wieder zurück nach innen geführt sind, ohne sich in Federrichtung I betrachtet zu überlappen, wobei jeweils zwei Federarme 4 an ihrem radial inneren Ende aneinander angeformt sind. An ihrem radial außen liegenden Ende 5 sind jeweils zwei Federarme 4 miteinander verbunden und von dort verbunden zurück nach radial innen geführt. Bis zu ihrer Verbindungsstelle 5 bilden die beiden verbundenen Federarme 4 zusammen einen Bogen. Neben der dargestellten ovalen Form kann auch eine Kreisform vorgesehen sein. Auch eine eckige oder jede andere Form ist grundsätzlich möglich.

Die beiden Federarme 4 sind an ihren gemeinsamen, nach radial innen zurückgeführten Abschnitten 6 aneinander angeformt bzw. einstückig miteinander ausgebildet. Das radial innere Ende der gemeinsamen Abschnitte 6 der jeweils paarweise verbundenen Federarme 4 geht im dargestellten Ausführungsbeispiel in ein ringförmiges Element 7 über. Die Öffnung 8 des Rings kann als Aufnahme für ein Verbindungselement einer hier nicht dargestellten Deckplatte dienen. Die Elemente 7 können aber auch selbst als Auflagefläche dienen. Gemeinsam bilden alle Elemente 7 jedenfalls die obere Stützfläche 2.

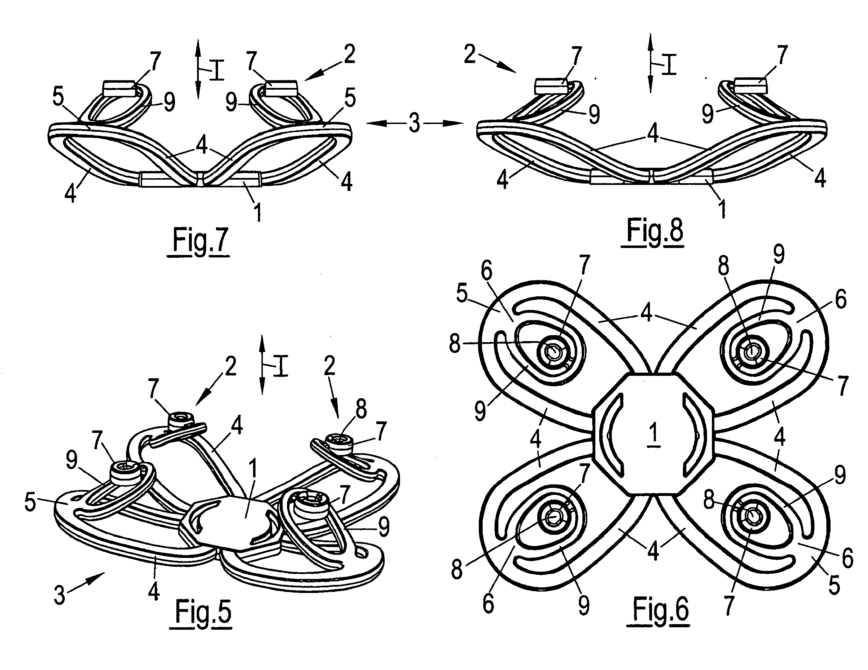

Das in den Fig. 5 bis 8 dargestellte Federelement umfasst ebenfalls eine untere Stützfläche 1, eine obere Stützfläche 2 und einen die untere Stützfläche 1 mit der oberen Stützfläche 2 verbindenden Federkörper 3. Der Federkörper 3 umfasst wiederum mehrere Federarme 4, die von der unteren Stützfläche 1 nach außen weg und dann anschließend wieder zurück nach innen geführt sind, ohne sich in Federrichtung I betrachtet zu überlappen. Außerdem sind auch hier jeweils zwei Federarme 4 an ihrem radial außen liegenden Ende 5 miteinander verbunden und von dort zurück nach radial innen geführt. Die zurückgeführten Abschnitte der Federarme 4 sind jedoch nicht miteinander verbunden sondern bilden ebenfalls einen Bogen 9. Der Bogen kann auch hier neben der dargestellten ovalen Form eine Kreisform, eine eckige oder jede andere Form aufweisen.

Auch bei dem in den Fig. 5 bis 8 dargestellten Federelement weisen die radial inneren Enden der rückgeführten Abschnitte 6, nämlich der Bögen 9, ein ringförmiges Element 7 auf, welches sich hier jedoch in Federrichtung I betrachtet innerhalb des Bogens 9 befindet und an dessen radial inneres Ende angeformt ist. Jedes ringförmige Element weist wiederum eine Öffnung 8 auf, die als Verbindungselement für eine Deckplatte dienen kann. Auch hier können die Elemente 7 selbst als Auflagefläche dienen oder als Teil einer Deckplatte ausgebildet sein.

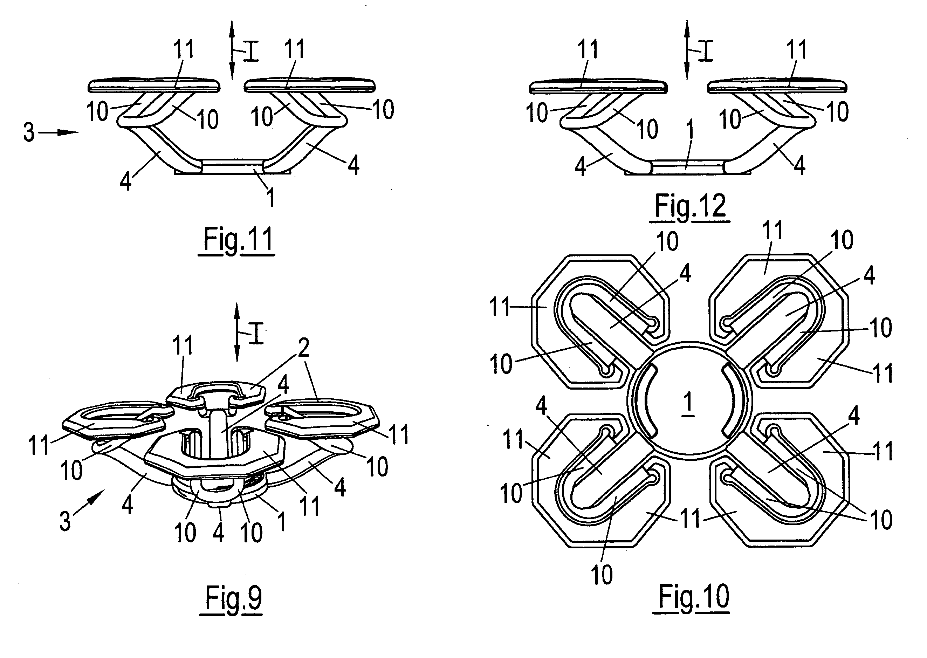

Das in den Fig. 9 bis 12 dargestellte erfindungsgemäße Federelement umfasst wiederum eine untere Stützfläche 1, eine obere Stützfläche 2 und einen die untere Stützfläche 1 mit der oberen Stützfläche 2 verbindenden Federkörper 3. Der Federkörper 3 umfasst vier Federarme 4, die von der unteren Stützfläche 1 nach radial außen weg und anschließend wieder zurück nach innen geführt sind, ohne sich in Federrichtung I betrachtet zu überlappen.

An den radial außen liegenden Enden der Federarme 4 sind jeweils zwei nach radial innen zurückgeführte Abschnitte 10 angeformt, die sich beidseits des Federarmes 4 befinden. Die rückgeführten Abschnitte 10 sind dann an ihrem radial innen liegenden Ende erneut nach radial außen geführt und am radial äußeren Ende des nach außen geführten Abschnitts miteinander verbunden. Dadurch wird eine parallel zur unteren Stützfläche 1 verlaufende obere Stützfläche 2 gebildet. Insbesondere bilden die nach radial außen geführten Abschnitte 11 jeweils einen Teil einer separaten Deckplatte.

### Bezugszeichenliste

- 1: untere Stützfläche
- 2: obere Stützfläche
- 3: Federkörper
- 4: Federarm
- 5: Umkehrpunkt
- 6: Abschnitt
- 7: Ringelement
- 8: Öffnung
- 9: Bogen
- 10: Abschnitt
- 11: Abschnitt
- I: Federrichtung

## Patentansprüche

1. Federelement, insbesondere als Kern einer Federkernmatratze oder als Stützelement einer Untermatratze zur Abstützung einer Obermatratze, mit einer unteren Stützfläche (1), einer oberen Stützfläche (2) und einem die untere Stützfläche (1) mit der oberen Stützfläche (2) verbindenden Federkörper (3), welcher mindestens zwei Federarme (4) aufweist, die von der unteren Stützfläche (1) nach außen weg und anschließend wieder zurück nach innen geführt sind, insbesondere ohne sich in Federrichtung (I) betrachtet zu überlappen, wobei jeder Federarm (4) zwei nach radial innen zurückgeführte Abschnitte (10) aufweist, die insbesondere beidseits des nach radial außen geführten Federarms angeordnet sind, und wobei an die radial inneren Enden der beiden nach radial innen zurückgeführten Abschnitte (10) jeweils ein weiterer nach radial außen geführter Abschnitt (11) anschließt,
**dadurch gekennzeichnet,**
**dass** die weiteren nach radial außen geführten Abschnitte (11) jedes Federarms (4) jeweils einen Teil einer Deckplatte bilden, die von den Deckplatten der übrigen Federarme (4) getrennt ist, und
**dass** die Deckplatten der Federarme (4) zusammen die obere Stützfläche (2) bilden.

2. Federelement nach Anspruch 1,
**dadurch gekennzeichnet, dass**
die weiteren nach radial außen geführten Abschnitte (11) in Federrichtung (I) betrachtet beidseits der beiden nach radial innen zurückgeführten Abschnitte (10) angeordnet und insbesondere an ihren radial außen liegenden Enden miteinander verbunden sind.

3. Federelement nach einem der vorhergehenden Ansprüche,
**dadurch gekennzeichnet, dass**
die Federarme (4) strahlenförmig nach radial außen verlaufen.

4. Federelement nach einem der vorhergehenden Ansprüche,
**dadurch gekennzeichnet, dass**
das Federelement aus Kunststoff besteht, wobei das Federelement bevorzugt einstückig ausgebildet ist, insbesondere ohne Abschnitte, die sich in Federrichtung (I) betrachtet gegenseitig überlappen.

## Claims

1. A spring element, in particular as a frame of an innerspring mattress or as a support element of an undermattress for supporting an overmattress, having a lower support surface (1), an upper support surface (2) and a spring body (3) which connects the lower support surface (1) to the upper support surface (2) and which has at least two spring arms (4) which are led away outwardly from the lower support surface (1) and are subsequently led back inwardly again, in particular without overlapping, viewed in the spring direction (I), wherein each spring arm (4) has two sections (11) which are led back radially inwardly and which are in particular arranged at both sides of the radially outwardly led spring arm, and wherein a respective further section (11) which is led radially outwardly adjoins the radially inner ends of the two sections (10) led back radially inwardly,
**characterized in that**
the further sections (11) of each spring arm (4) which are led radially outwardly each form a part of a cover plate which is separate from the cover plates of the other spring arms (4); and
**in that** the cover plates of the spring arms (4) together form the upper support surface (2).

2. A spring element in accordance with claim 1,
**characterised in that**,
viewed in the spring direction (I) the further sections (11) which are led radially outwardly are arranged at both sides of the two sections (10) led back radially inwardly and are in particular connected to one another at their ends disposed radially outwardly.

3. A spring element in accordance with one of the preceding claims,
**characterised in that**
the spring arms (4) extend radially outwardly in a ray-like manner.

4. A spring element in accordance with any one of the preceding claims,
**characterised in that**
the spring element is composed of plastic, with the spring element preferably being in one piece, in particular without sections which mutually overlap, viewed in the spring direction (I).

## Revendications

1. Élément de ressort, en particulier à titre de noyau d'un matelas à ressort ou à titre d'élément de soutien d'un sommier pour soutenir un matelas, comprenant une surface de soutien inférieure (1), une surface de soutien supérieure (2) et un corps de ressort (3) qui relie la surface de soutien inférieure (1) à la surface de soutien supérieure (2) et qui comprend au moins deux bras de ressort (4) qui sont menés vers l'extérieur en éloignement de la surface de soutien inférieure (1) et sont menés ensuite à nouveau en retour vers l'intérieur, en particulier sans se chevaucher lorsqu'on les observe dans la direction (1) du ressort, dans lequel chaque bras de ressort (4) comprend deux tronçons (10) menés en retour radialement vers l'intérieur, qui sont agencés en particulier des deux côtés du bras de ressort mené radialement vers l'extérieur, et dans lequel un autre tronçon respectif mené radialement vers l'extérieur (11) se raccorde aux extrémités radialement intérieures des deux tronçons (10) menés en retour radialement vers l'intérieur,
**caractérisé en ce que**
les autres tronçons (11) menés radialement vers l'extérieur de chaque bras de ressort (4) forment respectivement une partie d'une plaque de couverture qui est séparée des plaques de couverture des autres bras de ressort (4), et
**en ce que** les plaques de couverture des bras de ressort (4) forment conjointement la surface de soutien supérieure (2).

2. Élément de ressort selon la revendication 1,
**caractérisé en ce que** les autres tronçons (11) menés radialement vers l'extérieur sont agencés, considérés dans la direction (1) du ressort, des deux côtés des deux tronçons (10) menés en retour radialement vers l'intérieur, et sont en particulier reliés l'un à l'autre à leurs extrémités situées radialement à l'extérieur.

3. Élément de ressort selon l'une des revendications précédentes,
**caractérisé en ce que** les bras de ressort (4) s'étendent radialement vers l'extérieur sous la forme de rayons.

4. Élément de ressort selon l'une des revendications précédentes,
**caractérisé en ce que** l'élément de ressort est en matière plastique, et l'élément de ressort est réalisé de préférence d'une seule pièce, en particulier sans tronçons qui se chevauchent réciproquement, lorsqu'on les considère dans la direction (1) du ressort.
